# EUROPEAN PATENT SPECIFICATION

(11) **EP 3 559 127 B1**
(45) Date of publication and mention of the grant of the patent: **15.03.2023**
(21) Application number: 17882745.7
(22) Date of filing: 21.12.2017
(51) Int. Cl.: C09D 131/02, B65D 81/24, C08F 283/10, C08F 18/02, B65D 23/02, C08G 59/16, C08G 65/332, C09D 171/00, C08G 59/14

(54) **POLYMERS CONTAINING REACTIVE CARBONYL GROUPS AND COATING COMPOSITIONS CONTAINING SUCH POLYMERS**
POLYMERE MIT REAKTIVEN CARBONYLGRUPPEN UND BESCHICHTUNGSZUSAMMENSETZUNGEN MIT SOLCHEN POLYMEREN
POLYMÈRES CONTENANT DES GROUPES CARBONYLE RÉACTIFS ET COMPOSITIONS DE REVÊTEMENT CONTENANT DE TELS POLYMÈRES

(30) Priority: 21.12.2016 US 201662437463 P
(43) Date of publication of application: 30.10.2019
(73) Proprietor: SWIMC LLC, Cleveland, OH 44115 (US)
(72) Inventor: CALHOUN, Eric, Wyandotte, MI 48192 (US); HUYNH, Nhan, West Homestead, PA 15120 (US); SKILLMAN, Charles, Zelienople, PA 16063 (US); DENG, Lan, Solon, OH 44139 (US)
(74) Representative: Novagraaf Group
(86) International application number: PCT/US2017/067791
(87) International publication number: WO 2018/119175

(56) References cited:
- EP-B1- 0 199 087
- WO-A1-2013/098218
- US-A- 5 332 785
- US-A- 5 484 849
- US-A- 6 121 404
- US-A1- 2013 280 455
- US-A1- 2014 329 954
- US-A1- 2016 297 992

## Description

### CROSS-REFERENCE TO RELATED APPLICATION(S)

This application claims the benefit of U.S. Provisional Application No. 62/437,463 filed on December 21, 2016 and entitled "POLYMERS CONTAINING REACTIVE CARBONYL GROUPS AND COATING COMPOSITIONS CONTAINING SUCH POLYMERS".

### Technical Field

This invention relates to container coatings and coated containers.

### Background

Bisphenol A has been used to prepare polymers having a variety of properties and uses. For example, bisphenol A may be reacted with epichlorohydrin to provide polymers useful in packaging coatings. There is a desire to reduce or eliminate the use of certain bisphenol A-derived polymers in food or beverage container coatings. Although a number of replacement coating compositions made without bisphenol A have been proposed, some replacement compositions have exhibited insufficient coating properties such as insufficient corrosion resistance on metal substrates, insufficient flexibility or insufficient toughness.

Coatings for use on food or beverage containers should avoid unsuitably altering the taste of the packaged food or beverage products, and should also avoid flaking or chipping into the packaged products. The coatings should also resist chemically aggressive food or beverage products (which can have a complex chemical profile, including salt, acids, sugars, fats, etc.) for extended periods of time (e.g., years). Food or beverage container coatings should also have good adhesion to the underlying substrate and remain sufficiently flexible after curing, because subsequent denting during transportation, storage or use (e.g., by dropping) will cause the metal substrate to deform, which will cause the coating to flex. A brittle coating may crack during flexure, exposing the container metal to the packaged products, which can sometimes cause a leak in the container. Even a low probability of coating failure may cause a significant number of containers to leak, given the high number of food and beverage containers produced.

Accordingly, it will be appreciated that what is needed in the art are improved coating compositions that are made without intentionally using bisphenol A, but which exhibit the stringent balance of coating properties to permit the use of such coating compositions on food or beverage containers.

US 2016/297992 A1 discloses polytriglyceride-AAG compositions, and corresponding coatings and coated articles.

US 2014/329954 A1 discloses acetoacetate functional latex emulsions cured with phenolic resins and coating compositions formed therefrom.

US 2013/280455 A1 discloses a polymer that is useful in a variety of applications, including as a binder polymer of a coating composition, and especially a packaging coating composition.

US 6 121 404 A discloses beta-diketo functional organosilicon compounds, and a method of making the beta-diketo functional organosilicon compounds.

### Summary

The present invention relates to an article according to any one of claims 1 to 14, to a coating composition according to claim 15, as well as to a method according to claim 16. The present disclosure provides, in one aspect, a functionalized polymer having one or more reactive carbonyl groups, which are beta-dicarbonyl groups and/or groups capable of forming beta-dicarbonyl groups. The functionalized polymer of the present invention is a polyether polymer. In certain preferred embodiments, the reactive carbonyl groups are attached to another portion of the polymer (e.g., a backbone of the polymer) via a step-growth linkage (e.g., an amide, carbonate ester, ester, ether, urea, or urethane linkage). Ester and amide groups are preferred step-growth linkages.

In another aspect, the present disclosure provides a food or beverage container coating formulated using the functionalized polymer disclosed herein. In yet another aspect, the present disclosure provides an article comprising a food or beverage container, or a portion thereof (e.g., a can end, can body, or closure), having a metal substrate and a continuous thermally-cured coating disposed on at least a portion of the substrate, wherein the coating was formed by baking a coating composition (more preferably a liquid coating composition) at a temperature of at least 150°C. The coating composition includes, prior to bake, a polyether polymer having a beta-dicarbonyl group. The thermally-cured coating is preferably suitable for prolonged food-contact (e.g., months or years).

In yet another aspect, the present disclosure provides a method for producing a coated food or beverage container article that includes: applying the coating composition of the present disclosure including a polyether polymer having a beta-dicarbonyl group on a
metal substrate prior to or after forming the substrate into a food or beverage container or portion thereof.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list or limiting in any way. Unless otherwise indicated, the structural representations included herein are not intended to indicate any particular stereochemistry and are intended to encompass all stereoisomers.

### Definitions

The term "heteroatom" refers to any atom (e.g., oxygen, nitrogen, sulfur, phosphorus, silicon, etc.) that is not carbon or hydrogen.

The term "glass transition temperature" or "Tg" when used in respect to a polymer in a coating composition refers to the measured Tg obtained prior to any cure of such coating composition, and may be measured using differential scanning calorimetry ("DSC") as shown below.

The term "mobile" when used with respect to a compound in a coating composition means that the compound can be extracted from the coating composition when a coating (typically ~1 mg/cm²) is exposed to a test medium for some defined set of conditions, depending on the end use. Examples of these testing conditions include exposure of the cured coating to HPLC-grade acetonitrile for 24 hours at 25 °C. Other examples include exposure of the cured coating to 3 wt. % acetic acid (a simulant for aqueous and acidic foodstuffs), 10 vol. % ethanol (a simulant for alcoholic foodstuffs containing up to 10% alcohol), 50 vol. % ethanol (a simulant for milky foodstuffs), rectified olive oil, or alternatives to olive oil such as 95 vol. % ethanol, isooctane or modified polyphenylene oxide (MMPO). Exemplary procedures and limits are set out in European Union Commission Directives 82/711/EEC, 93/8/EEC and 97/48/EC and in 21 CFR section 175.300, paragraphs (d) and (e).

The term "on," when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (e.g., polymers of two or more different monomers). Similarly, unless otherwise indicated, the use of a term designating a polymer class such as, for example, "polyether" is intended to include both homopolymers and copolymers (e.g., polyether-ester copolymers).

The term "pendant group" when used with respect to a polymer refers to a group (viz., a side group) attached to the polymer at one or more atoms located between end atoms of the polymer backbone.

A group that may be the same or different is referred to as being "independently" something. The term "group" also encompasses single atom moieties. Thus, for example, a halogen atom can be a group.

The term "phenylene" as used herein refers to a six-carbon atom aryl ring (e.g., as in a benzene group) that can have any substituent groups (including, e.g., hydrogen atoms, hydrocarbon groups, oxygen atoms, hydroxyl groups, etc.). Thus, for example, the following aryl groups are each phenylene rings: -C₆H₄-, -C₆H₃(CH₃)-, and -C₆H(CH₃)₂(OH)-. In addition, for example, each of the aryl rings of a naphthalene group are phenylene rings.

The term "polyhydric phenol" (which includes dihydric phenols) as used herein refers broadly to any compound having one or more aryl or heteroaryl groups (more typically one or more phenylene groups) and at least two hydroxyl groups attached to a same or different aryl or heteroaryl ring. Thus, for example, both hydroquinone and 4,4'-biphenol are considered to be polyhydric phenols. As used herein, polyhydric phenols typically have six carbon atoms in an aryl ring, although it is contemplated that aryl or heteroaryl groups having rings of other sizes may be used.

The term "substantially free" when used with respect to a coating composition that may contain a particular mobile compound means that the coating composition contains less than 1,000 parts per million (ppm) of the recited mobile compound. The term "essentially free" when used with respect to a coating composition that may contain a particular mobile compound means that the coating composition contains less than 100 parts per million (ppm) of the recited mobile compound. The term "essentially completely free" when used with respect to a coating composition that may contain a particular mobile compound means that the coating composition contains less than 5 parts per million (ppm) of the recited mobile compound. The term "completely free" when used with respect to a coating composition that may contain a particular mobile compound means that the coating composition contains less than 20 parts per billion (ppb) of the recited mobile compound. If the aforementioned phrases are used without the term "mobile" (*e.g*., "substantially free of BPA compound") then the compositions contain less than the aforementioned amount of the compound whether the compound is mobile in the coating or bound to a constituent of the coating. When the phrases "free of' (outside the context of the aforementioned phrases), "does not include any" and the like are used herein, such phrases are not intended to preclude the presence of trace amounts of the pertinent structure or compound which may be present, e.g., as environmental contaminants.

The terms "preferred" and "preferably" refer to embodiments that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

The terms "comprises" and variations thereof do not have a limiting meaning where these terms appear in the description and claims.

As used herein, "a," "an," "the," "at least one," and "one or more" are used interchangeably. Thus, for example, a coating composition that comprises "a" polyether polymer can be interpreted to mean that the coating composition includes "one or more" polyether polymers.

Also herein, the recitations of numerical ranges by endpoints include all numbers subsumed within that range (e.g., 1 to 5 includes 1, 1.5, 2, 2.75. 3, 3.80, 4, 5, etc.). Furthermore, disclosure of a range includes disclosure of all subranges included within the broader range (e.g., 1 to 5 discloses 1 to 4, 1.5 to 4.5, 4 to 5, etc.).

### Detailed Description

The disclosed functionalized polymer includes at least one, and more preferably a plurality, of reactive carbonyl groups, which are beta-dicarbonyl groups. While not intending to be bound by theory, it is believed the presence of suitable reactive carbonyl groups such as beta-dicarbonyl groups on a polymer can improve one or more properties of a cured coating formulated using such a polymer (e.g., relative to an identical cured coating formulated using a comparable polymer lacking such reactive carbonyl groups). In fact, it has been discovered that a thermally-cured interior food or beverage can coating formulated using a polyether polymer having beta-dicarbonyl groups and lacking any external crosslinker can exhibit a comparable balance of coating properties as compared to an analogous coating formulated using a comparable non-functionalized polyether polymer and an external crosslinker (e.g., a phenolic or melamine-based crosslinker).

For convenience, the reactive carbonyl groups are referred to hereinafter as beta-dicarbonyl groups, which are preferred reactive carbonyl groups. It should be understood that other suitable reactive carbonyl groups may be employed and the following discussion should pertain to such groups to the extent the discussion is pertinent.

The functionalized polymer is a polyether polymer, more preferably an aromatic polyether polymer, and even more preferably an aromatic polyether polymer formed using ingredients including one or both of: (i) a polyhydric phenol (e.g., a dihydric phenol such as a diphenol) and (ii) a diepoxide (e.g., a diepoxide of a polyhydric phenol). For food or beverage container coating applications, the polyether polymer preferably has a number average molecular weight of at least 2,000 and a glass transition temperature of at least 30°C, and more preferably has a glass transition temperature of at least 60°C for interior food-contact coatings. In one such embodiment, a functionalized polymer in the form of an aromatic polyether polymer having reactive carbonyl groups, more preferably beta-dicarbonyl groups, is used as a film-forming polymer in a water-based, inside spray coating composition for food or beverage cans (e.g., an aluminum beverage can).

The beta-dicarbonyl groups can be present at any suitable locations within the polymer, including at one or both terminal ends of a backbone of the polymer or at one or more intermediate locations along the length of the polymer such as, e.g., in pendant groups attached to the polymer backbone. In preferred embodiments, the functionalized polymer has at least one pendant group that includes a beta-dicarbonyl group (e.g., as the entire pendant group or a portion of the pendant group). More preferably, the functionalized polymer includes a plurality of such groups (e.g., ≥ 2, ≥ 3, ≥ 4, ≥ 5, ≥ 6, ≥ 7, ≥ 8, ≥ 9, ≥ 10, etc.).

In preferred embodiments, a pendant beta-dicarbonyl group is attached to a backbone of the polymer (typically to a carbon atom of the backbone) via a heteroatom-containing linkage such as, e.g., an amide, carbonate ester, ester, ether, urea, or urethane linkage. Ester and amide groups are preferred such linkages.

The beta-dicarbonyl group can be of any suitable structure. In preferred embodiments, the beta-dicarbonyl group has a structure of Formula I shown below:

-(R¹)ₙ-C(=O)-C(R²)₂-C(=O)-R³ (I)

wherein:
- R¹, if present, is a linking group, more typically a divalent linking group, and even more typically a divalent linking group that includes at least one heteroatom, which is preferably attached to a backbone atom of the functionalized polymer;
- each R² is independently hydrogen, an organic group, or any other group that does not substantially reduce the reactivity of the carbon atom attached to the carbon atoms of the two depicted carbonyl group; more typically at least one R² is hydrogen;
- R³ is hydrogen, an organic group (e.g., an alkyl group), or any other group that does not substantially reduce the reactivity of the carbon atom attached to the carbon atoms of the two depicted carbonyl group;
- n is 0 or 1, more typically 1; and
- two or more of R¹, R², and/or R³ can optionally join to form one or more cyclic groups.

Substitution on the organic groups of the compounds and structures of the present disclosure (e.g., R¹, R², R³, etc.) is contemplated. Thus, organic groups include hydrocarbon groups with optional elements other than carbon and hydrogen, such as, e.g., oxygen, nitrogen, sulfur, silicon, and phosphorus.

R¹ is typically present in the structure of Formula (I). While R¹ can be any suitable group, typically R¹ includes at least one heteroatom (e.g., oxygen, nitrogen, sulfur, phosphorus, etc.). In some embodiments, R₁ has the structure -X(R⁴)ₜ-, wherein X is a heteroatom (more typically oxygen or nitrogen); t is an integer, typically 0 to 2 depending upon the valence of X, more typically 0 or 1; and R⁴, if present, is hydrogen or an organic group. In some embodiments, X is attached directly to a carbon atom of the backbone of the functionalized polyether polymer. In other embodiments, X is attached to an atom of a pendant group, wherein a chain of one or more atoms separates X from a backbone atom of the functionalized polyether polymer. In a presently preferred embodiment, t is 0 and X is an oxygen atom.

In general, R², R³, and R⁴ can be any group or atom that does not unsuitably interfere with the reactivity of the beta-dicarbonyl group. As discussed above, one or more of R², R³, and R⁴ can independently be an organic group. Examples of suitable such organic groups include aliphatic groups, cycloaliphatic groups, aryl groups, or combination thereof, which may optionally contain one or more heteroatoms such as oxygen, nitrogen, sulfur, etc. Although any suitable size organic groups may be used, typical organic groups include 20 or less carbon atoms (e.g., 1-20 carbon atoms), and more typically include 10 or less or 6 or less carbon atoms (e.g. 1-6C, 1-4C, 1-3C, etc.).

In preferred embodiments, at least one R² is a hydrogen atom. In some embodiments, each R² is a hydrogen atom. In other embodiments, one R² is a hydrogen atom and the other R² is an organic group.

In some embodiments, R³ is an alkyl group, with a methyl group (-CH₃) in particular being an exemplary alkyl group.

Although the beta-dicarbonyl groups (e.g., of Formula (I)) can be of any suitable size, typically it will be less than 1,000, less than 500, less than 400, less than 300, or less than 200 Daltons.

The one or more beta-dicarbonyl groups can be introduced into the polymer using any suitable methods and materials. One suitable such method includes reacting a beta-dicarbonyl compound including a first functional group, or a compound capable of forming such a beta-dicarbonyl compound, with a second functional group present on the polymer or an ingredient used to form the polymer (e.g., a monomer, oligomer, or prepolymer). The first and second functional groups can be any suitable functional groups capable of reacting with one another under desired reaction conditions to form a covalent linkage (e.g., a step-growth linkage such as any of those previously described herein). Exemplary first functional groups include ester groups, amide groups, acyl halide groups, and combinations thereof. Exemplary second functional groups include hydroxyl groups (e.g., secondary hydroxyl groups), amine groups, thiol groups, and combinations thereof.

In some embodiments, the first functional group is an ester group (e.g., present in an alkyl ester group) that reacts with a second functional group that is a hydroxyl group (e.g., a secondary hydroxyl group that reacts with the ester in a transesterification reaction) or other group capable of reacting with the ester group. An example of a preferred secondary hydroxyl group is the secondary hydroxyl group present in a -CH₂-CH(OH)-CH₂- or -CH₂-CH₂-CH(OH)- segment.

In some embodiments, the first functional group is an amide group and the second functional group is an amide-reactive group such as a hydroxyl group, more typically a secondary hydroxyl group.

In certain preferred embodiments, a beta-dicarbonyl compound of the below Formula (II) is used to incorporate a beta-dicarbonyl group into the polymer of the present disclosure.

R⁵-C(=O)-C(R²)₂-C(=O)-R³ (II)

wherein:
- R² and R³ are as described for Formula (I);
- R⁵ is preferably a halogen or an organic group that preferably includes at least a portion of the first functional group (typically an organic group containing from 1 to 10 carbon atoms such as, e.g., an aliphatic group, cycloaliphatic group, aryl group, or combination thereof, that typically contains one or more heteroatoms), more preferably an organic leaving group; and
- R³ and R⁵ can optionally be covalently linked to one another.

In some embodiments, R⁵ has the structure (R⁶)ₛ-X-, wherein:
- X is as described above;
- each R⁶ is independently hydrogen or a group, typically an organic group (e.g., an aliphatic group, cycloaliphatic group, aryl group, or combination thereof), which may optionally include one or more heteroatoms (e.g., one or more atoms other than carbon or hydrogen); and
- s is an integer, more typically 1 or 2 depending upon the valence of X.

In certain preferred embodiments, both of the following are true: (i) X is an oxygen atom or a nitrogen atom and (ii) at least one R⁶ is selected from (a) an alkyl group (e.g., a branched, non-branched, or cyclic alkyl group), which may optionally be substituted, or (b) an aryl or heteroaryl group. In some such embodiments, X is an oxygen atom (and, thus, s is 1) and R⁶ is a C1-C10, more typically a C1-C6, alkyl group such as, e.g., a methyl, ethyl, propyl, butyl, pentyl, hexyl, or isomer thereof (e.g., a t-butyl group, sec-butyl group, etc.).

Some illustrative examples of suitable beta-dicarbonyl compounds of Formula (II) are provided below:

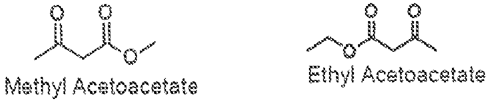

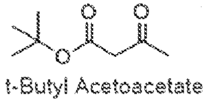

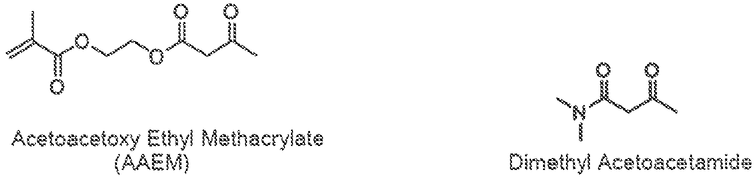

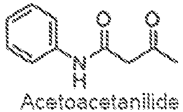

It is also contemplated that the beta-dicarbonyl groups can be positioned on the polymer using one or more reactants that do not include a beta-dicarbonyl group, but are capable of forming a beta-dicarbonyl group. Examples of such compounds may include compounds of the diketene family of compounds. Two illustrative examples of such compounds are provided below.

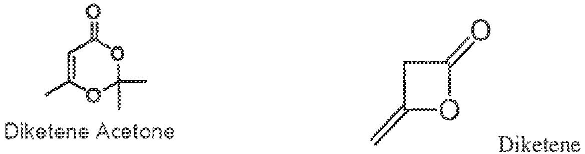

The disclosed functionalized polymers can include any suitable weight fraction of beta-dicarbonyl groups derived from beta-dicarbonyl compounds of Formula (II). In some embodiments, the disclosed polymers includes at least 0.5%, at least 1%, at least 2%, at least 5%, or at least 10% by weight of structural units derived from beta-dicarbonyl compounds of Formula (II), based on the total weight of reactants used to make the functionalized polymer.

The functionalized polymer preferably has a number average molecular weight (Mn) of at least 2,000, and may, for example, have an Mn of at least about 2,500, at least about 3,000, or at least about 4,000. The upper limit for the molecular weight will in general be governed by considerations such as the polymer solubility limit in the chosen coating solvent, the type of polymer, manufacturing considerations, etc. and may, for example, be an Mn value of less than about 20,000, less than about 10,000, less than about 8,000, or less than about 6,000. In one embodiment, the functionalized polymer is a polyether polymer having an Mn value that is the same as or similar to the Mn values of commercially available BPA-based epoxy materials (e.g.. those available under trade designations such as EPON 828, 1001, 1007 and 1009 from Resolution Performance Products, Houston, Texas), as doing so may simplify product reformulation and removal of BPA materials. An example of a suitable method for determining Mn is gel permeation chromatography ("OPC") using polystyrene standards.

The functionalized polymer is a polyether polymer..

For purposes of convenience, the functionalized polymer is generally referred to herein as a "polyether" polymer. Nonetheless, the following discussion, to the extent it does not relate specifically to the backbone chemistry of the polyether polymer embodiments, will generally be applicable to the other types of functionalized polymers disclosed herein. Other suitable polymer types may include, for example, acrylic, polyamide, polyester, polyolefin, polyurethane, or copolymers thereof.

As discussed above, in preferred embodiments, the coating composition of the present invention is suitable for use in forming a food-contact container coating. In order to exhibit a suitable balance of coating properties for use as a food-contact coating, including suitable corrosion resistance when in prolonged contact with packaged food or beverage products which may be of a corrosive nature, the functionalized polyether polymer preferably has a glass transition temperature ("Tg") of at least 60°C, more preferably at least 70°C, and even more preferably at least 80°C. In preferred embodiments, the Tg is less than 150°C, more preferably less than 130°C, and even more preferably less than 110°C.

While not intending to be bound by any theory, it is believed that it is important that the polymer exhibit a Tg such as that described above in applications where the coating composition will be in contact with food or beverage products during retort processing at high temperature (e.g., at temperatures at or above about 100°C and sometimes accompanied by pressures in excess of atmospheric pressure), and particularly when retort processing food or beverage products that are more chemically aggressive in nature. It is contemplated that, in some embodiments, such as, for example, where the coating composition is intended for use as an exterior varnish on a food or beverage container, the Tg of the polymer may be less than that described above (e.g., as low as about 30°C) and the coating composition may still exhibit a suitable balance of properties in the end use.

In preferred embodiments, the functionalized polymer is an aromatic polymer such as, e.g., an aromatic polyether polymer that includes aryl or heteroaryl groups in a polyether backbone and/or in pendant groups. Phenylene groups are preferred aryl groups. Thus, in particularly preferred embodiments, the functionalized polyether polymer includes a plurality of backbone phenylene groups.

While not intending to be bound by any theory, it is believed that the inclusion of a sufficient number of aryl and/or heteroaryl groups, which are typically phenylene groups, in the functionalized polymer can be an important factor for achieving suitable coating performance for food-contact container coatings, especially when the product to be packaged is a so called "hard-to-hold" food or beverage product. Sauerkraut is an example of a hard-to-hold product. In preferred embodiments, aryl and/or heteroaryl groups constitute at least 25 wt-%, more typically at least 30 wt-%, even more typically at least 35 wt-%, and even more typically at least 40 wt-% of the polymer, based on the total weight of aryl and heteroaryl groups in the polymer relative to the weight of the polymer. The upper concentration of aryl/heteroaryl groups is not particularly limited, but preferably the amount of such groups is configured such that the Tg of the functionalized polyether polymer is within the Tg ranges previously discussed. The total amount of aryl and/or heteroaryl groups in the functionalized polyether polymer will typically constitute less than about 80 wt-%, more typically less than 75 wt-%, even more typically less than about 70 wt-%, and even more typically less than 60 wt-% of the polymer. The total amount of aryl and/or heteroaryl groups in the functionalized polyether polymer can be determined based on the weight of aryl- or heteroaryl-containing monomer incorporated into the polymer and the weight fraction of such monomer that constitutes aryl or heteroaryl groups. In embodiments where the polymer is a polyether copolymer (e.g., a polyether-acrylic copolymer), the weight fraction of aryl or heteroaryl groups in the polyether polymer portion(s) of the copolymer will generally be as described above, although the weight fraction relative to the total weight of the copolymer may be less.

In certain preferred embodiments, the functionalized polymer is a polyether polymer that includes one or more -CH₂-CH(OZ)-CH₂- or-CH₂-CH₂-CH(OZ)- segments, which are preferably derived from an oxirane and located in a backbone of the polymer, wherein -OZ is a beta-dicarbonyl group of Formula (I), with O constituting all, or a portion, of R¹ and Z constituting the remainder of the group. Such segments can be formed, for example, by reacting a secondary hydroxyl group of a -CH₂-CH(OH)-CH₂- or -CH₂-CH₂-CH(OH)- segment with a beta-dicarbonyl compound of Formula (II).

Although any suitable method and materials may be used to prepare the disclosed functionalized polyether polymer, typically it will be prepared by reacting together ingredients including: (i) a polyepoxide, more typically a diepoxide, and (ii) a polymer backbone extender that includes two or more functional groups reactive with an epoxy group, and more typically two such epoxy-reactive functional groups. The two or more epoxy-reactive functional groups present in the extender may be identical or different. Examples of such functional groups include, for example, hydroxyl groups, hydroxyphenyl groups, acid groups, anhydride groups, and amine groups. Thus, examples of suitable extenders include diacids, diamines, diols, and particularly dihydric phenols (which may include hydroxyl groups attached to a same or different phenylene ring). Hydroxyl groups attached directly to aryl or heteroaryl groups (e.g., hydroxyphenyl groups) are a preferred class of extender hydroxyl groups, with polyhydric phenols and dihydric phenols being preferred such extenders. Examples of suitable dihydric phenols and backbone extenders are disclosed in U.S. Pat. No. 7,910,170; International Publication Nos. WO2015/160788, WO2015/057932, and WO2015/179064; U.S. Pub. Nos. US2013/0206756, US2013/0316109, US2014/0322465, and US2015/0021323; and U.S. Provisional App. Serial No. 62/439,564.

In preferred embodiments, one or both of the diepoxide and the extender include one or more aryl or heteroaryl groups, more typically phenylene groups. Such aromatic groups can be included in backbone or pendant locations, or both backbone and pendant locations. In some embodiments, the polyether polymer is a reaction product of ingredients including a dihydric phenol (e.g., a bisphenol such as, e.g., an ortho-substituted bisphenol or hydroquinone, resorcinol, catechol, or a substituted variant thereof) and a diepoxide (e.g., a diglycidyl ether of a dihydric phenol). In some embodiments an aliphatic or cycloaliphatic diepoxide may be used alone, or in combination with another diepoxide (including, e.g., a digylcidyl ether of a dihydric phenol). A diepoxide (e.g., digylcidyl ether) of 2,2,4,4-Tetramethyl-1,3-cyclobutanediol or isosorbide is an example of a preferred cycloaliphatic diepoxide for use in making the polyether polymer.

The reaction between a polymer backbone extender and a diepoxide may be carried out using techniques that will be familiar to persons having ordinary skill in the art.

In some embodiments, the polyether polymer can be prepared from ingredients including a dihydric phenol (e.g., a bisphenol) with halohydrin (e.g., epichlorohydrin) using the so-called "taffy" process, which is described in International Publication No. WO2015160788.

Although any suitable compounds may be used to produce the functionalized polyether polymer of the present disclosure, in preferred embodiments, the functionalized polyether polymer is substantially free of segments derived from bisphenol A and epoxides thereof. In some embodiments, the functionalized polyether polymer is also substantially free of each of: (i) segments derived from bisphenol F, including epoxides thereof, and (ii) segments derived from bisphenol S, including epoxides thereof. In some embodiments, the functionalized polyether polymer is also essentially free of polyhydric phenols (e.g., bisphenols) having estrogenic activity greater than or equal to that of bisphenol S, including epoxides thereof.

In some embodiments, the polyether polymer is substantially free, more preferably completely free, of bisphenol monomers and epoxides thereof. Examples of such polyether polymers are disclosed, for example, in US2015/0021323.

In some embodiments, the polyether polymer having secondary hydroxyl groups may be a reaction product of ingredients including: (i) an extender having at least two functional groups reactive with a cyclocarbonate group (e.g., a polyhydric phenol compound) and (ii) a polycyclocarbonate compound, which may optionally include a cyclic groups (other than a cyclocarbonate group) such as an aryl or heteroaryl group or an alicyclic group. Examples of such polymers are described in International Publication No. 2015/164703.

The functionalized polyether polymer may, for example, include at least 2, at least 4, at least 6, or at least 8 and up to 10 or more, up to 12 or more, or up to 15 or more ether linkages in the polymer backbone. The number of ether linkages may influence properties such as polymer polarity. The polymer desirably has sufficient polarity to exhibit good adhesion and wettability on metal substrates. In some embodiments, the polyether polymer has a low viscosity. In other embodiments, the functionalized polyether polymer has a high viscosity and is applied to a desired metal substrate by dissolving the polymer in a suitable coating solvent.

In some embodiments, the functionalized polyether polymer has a polydispersity index of about 2 to about 5.

If desired, the backbone of the disclosed polyether polymer may include step-growth linkages (e.g., condensation linkages) other than ether linkages (e.g., in addition to, or in place of, the ether linkages) such as, for example, amide linkages, carbonate linkages, ester linkages, urea linkages, urethane linkages, etc. Thus, for example, in some embodiments, the backbone may include both ester and ether linkages. In some embodiments, the backbone of the polymer does not include any condensation linkages or other step-growth linkages other than ether linkages.

If desired, one or more comonomers or co-oligomers may also be included with the reactants used to generate the disclosed polyether polymer (or added to the polyether polymer after its initial formation). Examples of such materials include diacids such as adipic acid, azelaic acid, terephthalic acid, isophthalic acid, and combinations thereof. The comonomers and/or co-oligomers may be included in an initial reaction mixture used to form the polyether and/or may be post-reacted with the resulting polyether oligomer or polymer.

Molecular weight advancement may also be enhanced by the use of a suitable catalyst in an amount sufficient to facilitate the desired reaction. Exemplary catalysts include amines, hydroxides (*e.g*., potassium hydroxide), phosphonium salts, and the like. A presently preferred catalyst is a phosphonium catalyst.

Depending upon the particular embodiment, the resulting polyether polymer may be amorphous or at least semi-crystalline. The polyether polymer may include branching, if desired in addition to any branching that may be provided by pendant beta-carbonyl groups. In some embodiments, the polyether polymer is a linear or substantially linear polymer.

Depending on stoichiometry and order of addition, the functionalized polyether polymer may, for example, have terminal epoxy groups derived from a diepoxide; terminal hydroxyl groups derived from a polymer backbone extender; or terminal groups derived from other comonomers or co-oligomers if used. The various terminal groups may optionally be reacted with a variety of other reactive materials to form desirable products. For example, epoxy-terminated polyether polymers may be reacted with polyamines or other epoxide-reactive crosslinkers to form thermoset compositions; with fatty acids to form curable polymers having unsaturated (*e.g*., air oxidizable) reactive groups; with acrylic acid or methacrylic acid to form free radically curable polymers; or with phosphoric or phosphonic acids to form phosphate esters. The types and amounts of reactants and conditions for such reactions will be familiar to persons having ordinary skill in the art.

In preferred embodiments, the coating composition is a liquid coating composition that includes a liquid carrier. For liquid-based coating compositions, the functionalized polymer will typically constitute at least 10 wt. %, more typically at least 30 wt. %, and even more typically at least 40 wt. % or at least 50 wt. % of the coating composition, based on the total weight of resin solids in the coating composition. For such liquid-based coating compositions, the functionalized polymer will typically constitute less than about 90 wt. %, more typically less than about 85 wt. %, and even more typically less than about 70 wt. % or less than about 60 wt.% of the coating composition, based on the total weight of resin solids in the coating composition.

Exemplary liquid carriers for forming liquid coating composition embodiments include water, organic solvents, and mixtures of liquid carriers. Exemplary organic solvents include glycol ethers, alcohols, aromatic or aliphatic hydrocarbons, dibasic esters, ketones, esters, and the like. Preferably, such carriers are selected to provide a dispersion or solution of the polymer with which additional additives may be combined to provide a final coating formulation.

In some embodiments, the disclosed liquid coating compositions are solvent-based systems that include no more than a *de minimus* amount of water *(e.g.,* less than 2 wt. % of water). The disclosed solvent-based liquid coating compositions may, for example, contain at least 20 wt. % non-volatile components *(viz.,* "solids"), and more preferably at least 25 wt. % non-volatile components. The disclosed solvent-based liquid coating compositions may also, for example, contain no greater than 50 wt. % non-volatile components, and more preferably no greater than 40 wt. % non-volatile components.

Water-based systems may be made, for example, as described in U.S. Patent Nos. 3,943,187, 4,076,676,4,212,781, 4,247,439, 4,285,847, 4,413,015,4,446,258, 4,517,322, 4,963,602, 5,296,525, 5,527,840, 5,830,952, 5,922,817, 7,189,787 and 8,092,876 and in U.S. Patent Application Publication No. US 2005/0196629 A1. Water-based coating systems may optionally include one or more organic solvents, which will typically be selected to be miscible in water. The liquid carrier system of a water-based coating composition will typically include at least 50 wt. % water, more typically at least 75 wt. % water, and in some embodiments more than 90 wt. % or more than 95 wt. % water. Any suitable technique may be used to render the disclosed polymers miscible in water. For example, the functionalized polymer may include a suitable amount of salt groups such as ionic or cationic salt groups (or groups capable of forming such salt groups) to render the polymer miscible in water. Neutralized acid or base groups are preferred salt groups. For example, a water-dispersible polymer may be formed by combining an epoxy-terminated polymer and an acid-functional polymer (either of which, or both, may be a functionalized polymer disclosed herein) in the presence of an amine or other suitable base (more preferably a tertiary amine). If desired, the acid-functional polymer may be combined with an amine (for example a tertiary amine) or other suitable base to at least partially neutralize the polymer prior to reaction with the epoxy-terminated polymer. In another embodiment, a water-dispersible free radically-polymerizable polymer may be formed by reacting an epoxy-terminated polymer with an ethylenically-unsaturated acidic monomer to form an acid-functional polymer, and then neutralizing the acid-functional polymer with, for example, an amine (preferably a tertiary amine) or other suitable base. If desired, an anhydride may be used in place of the acidic monomer. This will also provide acid functionality which, when combined with an amine or other suitable base to at least partially neutralize the acid functionality, will make the product water-dispersible.

The disclosed water-based compositions may, for example, contain at least 15 wt. % non-volatile components. The disclosed water-based compositions may also, for example, contain no greater than 50 wt. % non-volatile components, and more preferably no greater than 40 wt. % non-volatile components.

The disclosed functionalized polymers may serve as a binder polymer in the disclosed coating compositions. The functionalized polymer amount may vary widely depending on a variety of considerations including the method of application, the presence of other film-forming materials, whether the coating composition is a water-based or solvent-based system, and so on.

Preferred coating compositions are substantially free of each of mobile BPA and mobile bisphenol A diglycidyl ether (BADGE), mobile bisphenol S (BPS) and mobile BPS diglycidyl ether, mobile bisphenol F (BPF) and mobile BPF diglycidyl ether, more preferably are essentially free of each of these compounds, and most preferably are completely free of each of these compounds. In particularly preferred embodiments, the disclosed coating composition (and more preferably each of the polymers and optional ingredients included therein) is preferably substantially free of each of BPA, BPS, and BPF, including epoxides thereof, more preferably essentially free of each of these compounds, and most preferably completely free of each of these compounds.

In some embodiments, the coating composition includes an acrylic component that may optionally be covalently attached to a functionalized polymer disclosed herein. In some embodiments, the acrylic component may be present as a separate polymer blended with the functionalized polymer (in addition to any acrylic component that may optionally be covalently attached to the functionalized polymer). In certain water-based embodiments in which at least some of the acrylic component is covalently attached to the functionalized polymer, at least a portion of the acrylic monomers used to form the acrylic component are preferably capable of rending the functionalized polymer dispersible in water. In such embodiments, the acrylic component is preferably formed from an ethylenically unsaturated monomer mixture that includes one or more α,β-unsaturated carboxylic acids.

The coating composition may include any amount of acrylic component suitable to produce the desired film or coating properties. In some acrylic-component-containing embodiments, the coating composition includes an amount of acrylic component of at least about 5 wt. %, more preferably at least about 10 wt. %, and even more preferably at least about 15 wt. %, as determined based on the weight of the monomer mixture used to prepare the acrylic component compared to the total weight of resin solids in the coating system. In such embodiments, the coating composition typically includes less than about 90 wt. %, less than about 70 wt. %, less than about 50 wt. %, or less than about 40 wt. % acrylic component.

In some embodiments, the functionalized polymer is a water-dispersible copolymer including both one or more polyether portions and one or more acrylic portions. For example, a water-dispersible polymer may be formed having the structure E-L-.A, wherein E is a polyether portion of the polymer formed from a functionalized polyether polymer described herein, A is a polymerized acrylic portion of the polymer, and L is a linking portion of the polymer that covalently links E to A. Such a polymer can be prepared, for example, from (a) a functionalized polyether polymer described herein preferably having about two epoxy groups, (b) an unsaturated linking compound preferably having (i) a non-aromatic carbon-carbon double bond, non-aromatic conjugated carbon-carbon double bonds, or a carbon-carbon triple bond and (ii) a functional group capable of reacting with an epoxy group (e.g., a carboxylic group, a hydroxyl group, an amino group, an amido group, a mercapto group, or other epoxy-reactive groups that will be familiar to persons having ordinary skill in the art). Preferred linking compounds include 12 or fewer carbon atoms, with sorbic acid being an example of a preferred such linking compound. The acrylic portion preferably includes one or more salt groups or salt-forming groups (e.g., acid groups such as are present in α,β-ethylenically unsaturated carboxylic acid monomers). Such E-L-A polymers may be formed, for example, using a disclosed functionalized polyether polymer in combination with the materials and techniques disclosed in U.S. Pat. No. 5,830,952 (Pedersen et al.) or U.S. Patent Application Publication No. 2010/0068433 A1 (Gibanel et al.).

Although additional curing agents are not required for use with the functionalized polymers disclosed herein, in some embodiments it may be advantageous to include one or more optional curing agents (for example, crosslinking resins, sometimes referred to as "crosslinkers") in the coating composition. The choice of a particular crosslinker typically depends on the particular product being formulated. For example, some coating compositions are highly colored (*e.g*., gold-colored coatings). These coatings may typically be formulated using crosslinkers that themselves tend to have a yellowish color. In contrast, white coatings are generally formulated using non-yellow or non-yellowing crosslinkers, or only a small amount of a yellow or yellowing crosslinker.

Suitable examples of curing agents may include hydroxyl-reactive curing resins such as phenoplasts, aminoplast, blocked or unblocked isocyanates, or mixtures thereof.

Exemplary phenoplast resins include the condensation products of aldehydes with phenols. Formaldehyde and acetaldehyde are preferred aldehydes. Various phenols can be employed including phenol, cresol, p-phenylphenol, p-tert-butylphenol, p-tert-amylphenol and cyclopentylphenol.

Exemplary aminoplast resins are the condensation products of aldehydes such as formaldehyde, acetaldehyde, crotonaldehyde, and benzaldehyde with amino- or amido-group-containing substances such as urea, melamine, and benzoguanamine. Examples of suitable aminoplast crosslinking resins include, without limitation, benzoguanamine-formaldehyde resins, melamine-formaldehyde resins, etherified melamine-formaldehyde, and ureaformaldehyde resins.

Exemplary other generally suitable curing agents include blocked or non-blocked aliphatic, cycloaliphatic or aromatic di-, tri-, or poly-valent isocyanates, such as hexamethylene diisocyanate, cyclohexyl-1,4-diisocyanate, and the like. Further examples of generally suitable blocked isocyanates include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof.

Other suitable curing agents may include benzoxazine curing agents such as, for example, benzoxazine-based phenolic resins. Examples of benzoxazine-based curing agents are provided in US2016/0297994.

Alkanolamide-type curing agents may also be used. Preferred such curing agents include beta-hydroxyalkyl-amide crosslinkers such as, for example, those sold under the PRIMID tradename (e.g., the PRIMID XL-552 and QM-1260 products) by EMS-CHEMIE AG. The level of optional curing agent (*viz*., crosslinker) used will typically depend on the type of curing agent, the time and temperature of the bake, and the molecular weight of the binder polymer. If used, the crosslinker is typically present in an amount of up to 50 wt. %, preferably up to 30 wt. %, and more preferably up to 15 wt. %, based on the total weight of the resin solids in the coating composition. If used, a crosslinker is preferably present in an amount of at least 0.1 wt. %, more preferably at least 1 wt. %, and even more preferably at least 1.5 wt. %, based upon the total resin solids weight.As previously discussed, in some embodiments, coating compositions containing the disclosed functionalized polyether polymers can be prepared without including any formaldehyde-containing or melamine-containing crosslinker (or any other added crosslinkers) and exhibit comparable coating performance in an interior food or beverage can coating end use as compared to an analogous reference coating composition including such crosslinker in combination with a comparable polyether polymer that has not been functionalized to include beta-dicarbonyl groups. Thus, in some embodiments, the coating composition is substantially free of one or more, two or more, or all of: (i) formaldehyde-containing crosslinker, (ii) melamine-containing crosslinker, or (iii) any added external crosslinker (e.g., phenoplast resins, aminoplasts resins, blocked or unblocked isocyanates, etc.).

The disclosed coating compositions may also include other optional polymers that do not adversely affect the coating composition or a cured coating thereof. Such optional polymers are typically included as a nonreactive filler material, although they may be included as a reactive crosslinker, or to provide other desired properties.

Another preferred optional ingredient is a catalyst to increase the rate of cure. Examples of catalysts, include, but are not limited to, strong acids including phosphoric acid, dodecylbenzene sulfonic acid (DDBSA, available as CYCAT 600 from Cytec), methane sulfonic acid (MSA), p-toluene sulfonic acid (pTSA), dinonylnaphthalene disulfonic acid (DNNDSA), and triflic acid; quaternary ammonium compounds; phosphorous compounds; and tin, titanium, and zinc compounds. Additional examples include a tetraalkyl ammonium halide, a tetraalkyl or tetraaryl phosphonium iodide or acetate, tin octoate, zinc octoate, triphenylphosphine, and similar catalysts known to persons having ordinary skill in the art. If used, a catalyst is preferably present in an amount of at least 0.01 wt. %, and more preferably at least 0.1 wt. %, based on the weight of nonvolatile material in the coating composition. If used, a catalyst is preferably present in an amount of no greater than 3 wt. %, and more preferably no greater than 1 wt. %, based on the weight of nonvolatile material in the coating composition.

Another useful optional ingredient is a lubricant (*e.g.,* a wax), which facilitates manufacture of fabricated metal articles (*e.g.,* container closures and food or beverage can ends) by imparting lubricity to sheets of coated metal substrate. Examples of suitable lubricants include, for example, natural waxes such as Carnauba wax or lanolin wax, polytetrafluoroethane (PTFE) and polyethylene-type lubricants. If used, a lubricant is preferably present in the coating composition in an amount of at least 0.1 wt. %, and preferably no greater than 2 wt. %, and more preferably no greater than 1 wt. %, based on the total weight of nonvolatile material in the coating composition.

Another useful optional ingredient is a pigment, such as titanium dioxide. If used, a pigment is present in the disclosed coating composition in an amount of no greater than 70 wt. 96, more preferably no greater than 50 wt. %, and even more preferably no greater than 40 wt. %, based on the total weight of solids in the coating composition.

Surfactants may optionally be added to the disclosed coating composition to aid in flow and wetting of a substrate. Examples of surfactants include, but are not limited to, nonylphenol polyethers and salts and similar surfactants known to persons having ordinary skill in the art. If used, a surfactant is preferably present in an amount of at least 0.01 wt. %, and more preferably at least 0.1 wt. %, based on the weight of resin solids. If used, a surfactant is preferably present in an amount no greater than 10 wt. %, and more preferably no greater than 5 wt. %, based on the weight of resin solids.

The disclosed coating compositions may also include other optional ingredients that do not adversely affect the coating composition or cured coating thereof. Such optional ingredients are typically included in a coating composition to enhance composition esthetics; to facilitate manufacturing, processing, handling, or application of the composition; or to further improve a particular functional property of a coating composition or a cured coating thereof. For example, the disclosed coating compositions may optionally include fillers other than those already mentioned, dyes, colorants, toners, coalescents, extenders, anticorrosion agents, flow control agents, thixotropic agents, dispersing agents, antioxidants, oxygen-scavenging materials, adhesion promoters, light stabilizers, and mixtures thereof, as required to provide desired film properties. Each optional ingredient is preferably included in a sufficient amount to serve its intended purpose, but not in such an amount to adversely affect a coating composition or a cured coating thereof.

The disclosed functionalized polymers and coating compositions preferably are substantially free, essentially free, essentially completely free or completely free of each of halogen atoms, sulfur atoms (*e.g.,* sulfides), chromates or other materials that might impart an off-taste to food or beverages. cause migration of dangerous or potentially dangerous additives into a food or beverage, or otherwise render the disclosed coating compositions unsuitable for use in packaging foods and beverages.

The disclosed coating compositions may be present as a layer of a mono-layer coating system or as one or more layers of a multi-layer coating system. The coating composition can be used as a primer coat, an intermediate coat, a top coat, or a combination thereof. The coating thickness of a particular layer and of the overall coating system will vary depending upon the coating material used, the substrate, the coating application method, and the end use for the coated article. Mono-layer or multi-layer coating systems including one or more layers formed from the disclosed coating composition may have any suitable overall coating thickness, but will typically have an overall average dry coating thickness of from about 1 to about 60 micrometers and more typically from about 2 to about 15 micrometers. Typically, the average total dry coating thickness for rigid metal food or beverage can applications will be about 3 to about 10 micrometers. Coating systems for use on closures (e.g., twist-off metal closures) for food or beverage containers may have an average total coating thickness up to about 15 micrometers. In certain embodiments in which the coating composition is used as an interior coating on a drum (e.g., a drum for use with food or beverage products), the total average coating thickness may be approximately 25 micrometers.

The metal substrate used in forming rigid food or beverage cans, or portions thereof, typically has an average thickness in the range of about 125 micrometers to about 635 micrometers. Electro tinplated steel, cold-rolled steel and aluminum are commonly used as metal substrates for food or beverage cans, or portions thereof. In embodiments in which a metal foil substrate is employed in forming, e.g., a packaging article, the thickness of the metal foil substrate may be even thinner that that described above.

The disclosed coating compositions may be applied to a substrate either prior to, or after, the substrate is formed into an article such as, for example, a food or beverage container or a portion thereof. In one embodiment, a method of forming food or beverage cans is provided that includes: applying a coating composition described herein to a metal substrate (*e.g.,* applying the composition to the metal substrate in the form of a planar coil or sheet), hardening the composition, and forming (*e.g.,* via stamping or drawing) the substrate into a packaging container or a portion thereof (*e.g.,* a food or beverage can or a portion thereof). For example, two-piece or three-piece cans or portions thereof such as riveted beverage can ends (*e.g.,* soda or beer cans) with a cured coating of the disclosed coating composition on a surface thereof can be formed in such a method. In another embodiment, a method of forming food or beverage cans is provided that includes: forming (*e.g.,* via stamping or drawing) a metal substrate into a packaging container or a portion thereof (*e.g.,* a food or beverage can or a portion thereof), applying a coating composition described herein to the inside, outside or both inside and outside portions of such packaging container or a portion thereof, and hardening the composition. The disclosed functionalized polymers are especially desirable for use on the inside or interior portion of such food or beverage containers, and for other applications involving prolonged food or beverage contact with a metal substrate. Exemplary such applications include two-piece drawn food cans, three-piece food cans, food can ends, drawn and ironed food or beverage cans, beverage can ends, easy open can ends, twist-off closure lids, and the like.

After applying the coating composition onto a substrate, the composition can be cured using a variety of processes, including, for example, oven baking by either conventional or convectional methods, or any other method that provides an elevated temperature suitable for curing the coating. The curing process may be performed in either discrete or combined steps. For example, substrates can be dried at ambient temperature to leave the coating compositions in a largely uncrosslinked state. The coated substrates can then be heated to fully cure the compositions. In certain instances, the disclosed coating compositions may be dried and cured in one step.

The cure conditions will vary depending upon the method of application and the intended end use. The curing process may be performed at any suitable temperature, including, for example, oven temperatures in the range of from about 150 °C. to about 300 °C., and more typically from about 177 °C. to about 250 °C. If a metal coil is the substrate to be coated, curing of the applied coating composition may be conducted, for example, by heating the coated metal substrate over a suitable time period to a peak metal temperature ("PMT") of preferably greater than about 177 °C. More preferably, the coated metal coil is heated for a suitable time period (e.g., about 5 to 900 seconds) to a PMT of at least about 218 °C.

The following test methods are useful for evaluating the polymers and/or coatings of the present invention such as those described in the Examples below.

### Differential Scanning Calorimetry

Samples for differential scanning calorimetry ("DSC") testing are prepared by first applying a liquid resin composition containing the polymer of interest onto aluminum sheet panels. The panels are baked in a Fisher ISOTEMP^{™} electric oven for 20 minutes at 149 °C. to remove volatile materials. After cooling to room temperature, the samples are scraped from the panels, weighed into standard sample pans and analyzed using a standard DSC heat-cool-heat method in which the samples are equilibrated at -60 °C., then heated at 20 °C. per minute to 200 °C., cooled to -60 °C., and then heated again at 20 °C. per minute to 200 °C. Tg values are calculated from a thermogram of the last heat cycle, with Tg being measured at the inflection point of the transition.

### Solvent Resistance

The extent of "cure" or crosslinking of a coating may be measured as a resistance to solvents, such as methyl ethyl ketone (MEK) or isopropyl alcohol (IPA). This test is performed as described in ASTM D5402-93. The number of double-rubs (i.e., one back-and forth motion) is reported.

### Global Extraction

The global extraction test is designed to estimate the total amount of mobile material that can potentially migrate out of a coating and into food packed in a coated can. Typically, a coated substrate is subjected to water or solvent blends under a variety of conditions to simulate a given end use.

Extraction may for example be evaluated using the procedures described in European Union Commission Directives 82/711/EEC, 93/8/EEC and 97/48/EC, and using 3% acetic acid (weight/volume) as a simulant for aqueous and acidic foodstuffs, and 10, 50 and 95 volume percent ethanol solutions as respective simulants for alcoholic foodstuffs, milky foodstuffs and fatty foodstuffs. Coated panels are cut into 2 x 12.5 cm strips. The strips are folded in half and placed in a 125 mL glass jar. At least two samples are evaluated for each test. The jars are filled with 100 mL of food simulant solution, covered with polytetrafluoroethylene film in sealed with plastic caps. The jars and a similar weighed control jar containing food simulant solution but no coated panel strip are placed in an oven or autoclave for the time periods specified in the Directive, then removed and cooled. The simulant solutions are transferred to clean, weighed 125 mL glass jars and the solutions are evaporated to dryness. The measured residue for the control solution is subtracted from the measured residue for the test sample and the migration in milligrams per dm² of coating is calculated.

Extraction may also be evaluated using the procedure described in 21 CFR section 175.300, paragraph (e) (4) (xv) but with modifications according to the FDA publication "Guidelines for Industry" for preparation of Food Contact Notifications, to ensure worst-case scenario performance: 1) the alcohol content is increased to 10% by weight and 2) the filled containers are held for a 10-day equilibrium period at 37.8 °C. The coated beverage can is filled with 10 wt % aqueous ethanol and subjected to pasteurization conditions (65.6 °C) for 2 hours, followed by a 10-day equilibrium period at 37.8 °C. Determination of the amount of extractives is determined as described in 21 CFR section 175.300, paragraph (e) (5), and ppm values are calculated based on surface area of the can (no end) of 283.9 cm² with a volume of 355 milliliters (ml). Preferred coatings give global extraction results of less than 50 ppm, more preferred results of less than 10 ppm, and even more preferred results of less than 1 ppm. Most preferably, the global extraction results are optimally non-detectable.

### Adhesion

Adhesion testing may be performed to assess whether the coating adheres to the coated substrate. The adhesion test is performed according to ASTM D3359, Test Method B, using SCOTCH^{™} 610 tape (available from 3M Company of Saint Paul, Minnesota). Adhesion is generally rated on a scale of 0-10 where a rating of "10" indicates no adhesion failure, a rating of "9" indicates 90% of the coating remains adhered, a rating of "8" indicates 80% of the coating remains adhered, and so on. Adhesion ratings of 10 are typically desired for commercially viable coatings.

### Blush Resistance

Blush resistance measures the ability of a coating to resist attack by various solutions. Typically, blush is measured by the amount of water absorbed into a coated film. When the film absorbs water, it generally becomes cloudy or looks white. Blush is generally measured visually using a scale of 0-10 where a rating of "10" indicates no blush and a rating of "0" indicates complete whitening of the film. Blush ratings of at least 7 are typically desired for commercially viable coatings and optimally 9 or above.

### Dowfax Detergent Pasteurization Test

The "Dowfax" test is designed to measure the resistance of a coating to a boiling detergent solution. The solution is prepared by mixing 5 ml of Dowfax 2A1 (product of Dow Chemical) into 3,000 ml of deionized water. Typically, coated substrate is immersed into the boiling Dowfax solution for 15 minutes. The coated substrate is then rinsed and cooled in deionized water, dried, and then tested and rated for blush and adhesion as described below.

### Liquid Retort Test

This is a measure of the coating integrity of the coated substrate after exposure to heat and pressure with a liquid such as deionized (DI) water or a solution of 2-wt% citric acid in DI water. Retort performance is not necessarily required for all food and beverage coatings, but is desirable for some product types that are packed under retort conditions. Testing is accomplished by subjecting the coated substrate to heat ranging from 105 °C. to 130 °C. and pressure ranging from 0.7 kg/cm² to 1.05 kg/cm² for a period of 15 minutes to 90 minutes. For the present evaluation, the coated substrate may be immersed in deionized water and subjected to heat of 121 °C. and pressure of 1.05 kg/cm² for a period of 90 minutes. The coated substrate may then be tested for adhesion and blush as described below. In food or beverage applications requiring retort performance, adhesion ratings of 10 and blush ratings of at least 7 are typically desired for commercially viable coatings.

### T-Bend Fabrication Test

A 2-inch strip of a coated metal panel is bent over on itself along an axis perpendicular to its length. For a 3T bend, the strip is bent to a 180° angle and subsequently compressed upon three panels of identical thickness to the test panel, such that the internal diameter of the bend is three times the thickness of the metal. The exterior surface of the bend is exposed for a period of 4 seconds to a room-temperature electrolyte solution comprised of 1% NaCl by weight in deionized water via a sponge saturated with said solution. The coating to be evaluated is present on the exterior surface of the bent metal strip at a dry film thickness of 6 to 7.5 milligrams per square inch ("msi") (or 9.3 to 11.6 grams per square meter), with 7 msi being the target thickness. In the current case, metal exposure was measured using a WACO Enamel Rater II, available from the Wilkens-Anderson Company, Chicago, Ill., with an output voltage of 6.3 volts. The measured electrical current, in milliamps, is reported.

### EXAMPLES

The present disclosure is more particularly described in the following examples that are intended as illustrations only, since numerous modifications and variations within the scope of the present disclosure will be apparent to those skilled in the art. Unless otherwise indicated, all parts and percentages are by weight. Unless indicated otherwise, the test methods described above were used to generate the data included in the below Tables. "AcAc-modification" or "modified" polymer or resin indicates a polymer (in this case a non-BPA polyether) whose backbone has been covalently modified with acetoacetate functionality. The aluminum test panels used were 0.0082 inches thick, made from a 5182 alloy, and previously coated with a non-Chrome pretreatment. All raw materials can be obtained from Sigma Aldrich unless otherwise indicated.

### Comparative Example 1

**Synthesis of unmodified polyether.** 940.1 parts tetramethyl bisphenol F diglycidyl ether, 234.4 parts hydroquinone, 1.17 parts ethyltriphenylphosphonium iodide, and 26.6 parts methylisobutylketone were charged to a 4-neck, 3-liter round bottom flask fitted with a mechanical stirrer, thermometer, nitrogen inlet, and water-cooled condenser to return volatile contents back into the flask. Agitation and nitrogen flow were initiated, and the flask was heated to 130°C with an electric heating mantle. Once the contents reached 130°C, the reaction began to exotherm which carried the temperature 182°C. The rate of the exotherm was controlled by dropping the heating mantle and cooling the flask with a stream of air such that the time from 130°C to 182°C was roughly 20 minutes. After the exotherm, the set temperature was increased to 171°C, and the reaction was held until an epoxy value (eV) of 0.024 eq/100g (molar equivalents of epoxy groups per 100 grams resin) was reached. At this point the heat was removed, and 797.8 parts cyclohexanone were added. The resulting resin had the following characteristics: polyether value of 0.021 eq/100g, a non-volatile solids content of 62.0%, a number-averaged molecular weight of 7,840 Daltons, a weight-averaged molecular weight of 21,520 Daltons, and 2.8% less-than-1000-Daltons.

### Comparative Example 1A

**Preparation of unmodified polyether coating without melamine.** 17.5 parts of the unmodified polyether resin from Comparative Example 1 and 18.4 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. The non-volatile solids content was experimentally determined to be 29.1%. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Comparative Example 1B

**Preparation of unmodified polyether coating with melamine.** 17.5 parts of the unmodified polyether resin from Comparative Example 1 and 18.4 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 0.75 parts of a 50% melamine solution in carbitol was then added to the solution and stirred until homogeneous. The non-volatile solids content was experimentally determined to be 29.1%. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Comparative Example 1C

**Preparation of unmodified polyether coating with melamine.** 17.9 parts of the unmodified polyether resin from Comparative Example 1 and 18.8 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 2.35 parts of a 50% melamine solution in carbitol was then added to the solution and stirred until homogeneous. The non-volatile solids content was experimentally determined to be 29.1%. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Comparative Example 1D

**Preparation of unmodified polyether coating with melamine.** 22.1 parts of the unmodified polyether resin from Comparative Example 1 and 23.0 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 6.18 parts of a 50% melamine solution in carbitol was then added to the solution and stirred until homogeneous. The non-volatile solids content was experimentally determined to be 29.1%. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 2

**Synthesis of modified polyether.** 389.4 parts of the finished resin from Comparative Example 1 was charged to a 4-neck, 1-liter round bottom flask fitted with a mechanical stirrer, thermometer, nitrogen inlet, and distillate trap and water-cooled condenser set to collect volatile products of reaction. Agitation and nitrogen flow were initiated, and the flask was heated to 140°C with an electric heating mantle. Once the contents of the flask reached 140°C, 22.9 parts t-butylacetoacetate were added, and the batch was held at temperature until 8.7 parts of distillate were collected (approximately 3 hours). The resulting resin had the following characteristics: a non-volatile solids content of 65.0%, a number-averaged molecular weight of 8,040 Daltons, a weight-averaged molecular weight of 28,250 Daltons, and 1.4% less-than-1000-Daltons.

### Example 2A

**Preparation of modified polyether coating without melamine.** 14.9 parts of the modified polyether resin from Example 2 and 15.4 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. The non-volatile solids content was theoretically determined to be 30.0%, and the acetoacetate equivalent weight was theoretically determined to be 1792 (i.e., the grams of modified polyether resin that provide 1 mole of acetoacetate groups). The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 2B

**Preparation of modified polyether coating with melamine.** 14.9 parts of the modified polyether resin from Example 2 and 15.4 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 0.66 parts of a 50% melamine solution in carbitol was then added to the solution and stirred until homogeneous. The non-volatile solids content was theoretically determined to be 34.4%, and the acetoacetate equivalent weight was theoretically determined to be 1792. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 3

**Synthesis of modified polyether.** 353.4 parts of the finished resin from Comparative Example 1 was charged to a 4-neck, 1-liter round bottom flask fitted with a mechanical stirrer, thermometer, nitrogen inlet, and distillate trap and water-cooled condenser set to collect volatile products of reaction. Agitation and nitrogen flow were initiated, and the flask was heated to 140°C with an electric heating mantle. Once the contents of the flask reached 140°C, 58.4 parts t-butylacetoacetate were added, and the batch was held at temperature until 25.8 parts of distillate were collected (approximately 4 hours). The resulting resin had the following characteristics: epoxy value of 0.006 eq/100g, a non-volatile solids content of 65.6%, a number-averaged molecular weight of 7,990 Daltons, a weight-averaged molecular weight of 28,750 Daltons, and 1.5% less-than-1000-Daltons.

### Example 3A

**Preparation of modified polyether coating without melamine.** 16.7 parts of the modified polyether resin from Example 3 and 17.3 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. The non-volatile solids content was theoretically determined to be 30.0%, and the acetoacetate equivalent weight was theoretically determined to be 594. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 3B

**Preparation of modified polyether coating with melamine.** 16.7 parts of the modified polyether resin from Example 3 and 17.3 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 2.28 parts of a 50% melamine solution in carbitol was then added to the solution and stirred until homogeneous. The non-volatile solids content was theoretically determined to be 34.4%, and the acetoacetate equivalent weight was theoretically determined to be 594. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 4

**Synthesis of modified polyether.** 347.5 parts of the finished resin from Comparative Example 1 was charged to a 4-neck, 1-liter round bottom flask fitted with a mechanical stirrer, thermometer, nitrogen inlet, and distillate trap and water-cooled condenser set to collect volatile products of reaction. Agitation and nitrogen flow were initiated, and the flask was heated to 140°C with an electric heating mantle. Once the contents of the flask reached 120°C, 123.4 parts t-butylacetoacetate were added, and the batch was held at temperature until 38.9 parts of distillate were collected (approximately 5 hours). The resulting resin had the following characteristics: a non-volatile solids content of 65.0%, a number-averaged molecular weight of 9,240 Daltons, a weight-averaged molecular weight of 32,170 Daltons, and 1.0% less-than-1000-Daltons.

### Example 4A

**Preparation of modified polyether coating without melamine.** 15.7 parts of the modified polyether resin from Example 4 and 16.3 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. The non-volatile solids content was theoretically determined to be 30.0%, and the acetoacetate equivalent weight was theoretically determined to be 276. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

### Example 4B

**Preparation of modified polyether coating with melamine.** 15.7 parts of the modified polyether resin from Example 4 and 16.3 parts of methyl ethyl ketone (MEK) were added to an open, cylindrical mixing vessel fitted with a plastic stirring prop. This mixture was stirred at room temperature (at a rate which produced a moderate vortex) until a homogeneous solution was achieved. 4.83 parts of a 50% melamine solution in carbitol was then added to the solution and stirred until homogeneous. The non-volatile solids content was theoretically determined to be 34.4%, and the acetoacetate equivalent weight was theoretically determined to be 276. The resulting solution was drawn down on an aluminum panel using a wire-wound rod selected to give a cured coating thickness of approximately 7.0 milligrams per square inch (msi) and subsequently baked in an electric, forced-draft oven for 60 seconds at 240°C.

**Table 1**

| **Coating** | **MEK Double Rubs** |
|---|---|
| Comparative | |
| Example 1A | 2 |
| Example 2A | 7 |
| Example 3A | 50 |
| Example 4A | 145 |
| Example 2B | 8 |
| Example 3B | 60 |
| Example 4B | 300 |
| Comparative Example 1B | 3 |
| Comparative Example 1C | 3 |
| Comparative Example 1D | 3 |

Table 2 below shows the 3T Bend results for the aluminum panels prepared in the examples and comparative examples. Lower values indicate an improved ability to fabricate a panel into a useful part, such as a can end, and values of 30 milliamps (mA) or less are generally expected to be acceptable for fabrication performance. Most examples in Table 2 predict acceptable fabrication performance (most notably, the self-crosslinked examples: 2A, 3A, and 4A) with the exception of the most-highly modified and externally-crosslinked examples: 3B and 4B.

**Table 2**

| **Coating** | **3T Bends (mA)** |
|---|---|
| Comparative | |
| Example 1A | 6.8 |
| Example 2A | 6.7 |
| Example 3A | 11.2 |
| Example 4A | 29.3 |
| Example 2B | 24.5 |
| Example 3B | 34.4 |
| Example 4B | 75.2 |
| Comparative Example 18 | 6.9 |
| Comparative Example 1C | 13.4 |
| Comparative Example 1D | 5.5 |

The Dowfax pasteurization results shown in the below Table 3 indicate that the higher-modified, self-crosslinked coatings (examples 3A and 4A) exhibited similar film integrity in the test relative to their externally-crosslinked counterparts (examples 3B and 3C).

**Table 3**

| **Coating** | **Dowfax Pasteurization** | |
|---|---|---|
| | **Blush** | **Adhesion** |
| Comparative | | |
| Example 1A | 4 | 10 |
| Example 2A | 1 | 9 |
| Example 3A | 8 | 7 |
| Example 4A | 10 | 10 |
| Example 2B | 5 | 10 |
| Example 3B | 8 | 10 |
| Example 4B | 10 | 10 |
| Comparative Example 18 | 3 | 10 |
| Comparative Example 1C | 3 | 10 |
| Comparative Example 1D | 3 | 10 |

Deionized water retort results shown below in Table 4 indicated a similar trend to that seen above in Table 3, namely -- increased performance in the test with increased levels of acetoacetate-modification.

**Table 4**

| **Coating** | **DI Water Retort (liquid/vapor)** | |
|---|---|---|
| | **Blush** | **Adhesion** |
| Comparative | | |
| Example 1A | 3/3 | 10/10 |
| Example 2A | 2/2 | 10/10 |
| Example 3A | 2/3 | 10/10 |
| Example 4A | 10/9 | 10/10 |
| Example 2B | 4/4 | 10/10 |
| Example 3B | 9/9 | 10/10 |
| Example 4B | 10/10 | 10/10 |
| Comparative Example 1B | 3/3 | 10/10 |
| Comparative Example 1C | 4/4 | 10/10 |
| Comparative Example 1D | 3/3 | 10/10 |

In Table 5 below, the coated panels were exposed to a 2% citric acid retort process to better simulate the commercial retort conditions experience by the interior coatings of cans packed with certain beverage products. Again, the most highly-modified example coating was able to perform similarly to its externally-crosslinked counterpart.

**Table 5**

| **Coating** | **2% Citric Acid Retort** | |
|---|---|---|
| | **Blush** | **Adhesion** |
| Comparative Example 1A | 1 | 10 |
| Example 2A | 1 | 9 |
| Example 3A | 4 | 7 |
| Example 4A | 9 | 10 |
| Example 2B | 2 | 10 |
| Example 3B | 7 | 10 |
| Example 4B | 10 | 10 |
| Comparative Example 1B | 1 | 10 |
| Comparative Example 1C | 1 | 10 |
| Comparative Example 1D | 1 | 10 |

## Claims

1. An article comprising a food or beverage container, or a portion thereof, the article comprising:
a metal substrate;
a thermally-cured coating disposed on at least a portion of the substrate, wherein the coating was formed by baking a coating composition at a temperature of at least 150°C, and wherein, prior to bake, the coating composition comprises a polyether polymer having a beta-dicarbonyl group.

2. The article of claim 1, wherein the beta-dicarbonyl group has the structure of the below Formula (1):
-(R¹)ₙ-C(=O)-C(R²)₂-C(=O)-R³ (I)
wherein:
R¹, if present, is a linking group attached to a backbone atom of the polymer;
each R² is independently hydrogen, an organic group, or any other group that does not substantially reduce the reactivity of the carbon atom attached to the carbon atoms of the two depicted carbonyl groups;
R³ is hydrogen, an organic group, or any other group that does not substantially reduce the reactivity of the carbon atom attached to the carbon atoms of the two depicted carbonyl groups;
n is 0 or 1; and
two or more of R¹, R², and/or R³ can optionally join to form one or more cyclic groups.

3. The article of claim 2, wherein n is 1.

4. The article of claim 3, wherein R¹ includes an oxygen or nitrogen atom.

5. The article of claim 4, wherein the oxygen or nitrogen atom is attached to the depicted carbon of the carbonyl group.

6. The article of any of claims 1 to 5, wherein the beta-dicarbonyl group is present in a pendant group attached to a backbone atom of the polymer, and wherein the pendant group is provided by reaction of a first functional group present on a beta-dicarbonyl compound or a compound capable of forming a beta-dicarbonyl group with a second functional group present on the polymer or a precursor thereof and preferably wherein the first functional group is an ester group, amide group, or acyl halide group and/or preferably wherein the second functional group is a hydroxyl or amine group.

7. The article of claim 6, wherein the second functional group is a secondary hydroxyl group.

8. The article of claim 7, wherein the secondary hydroxyl group is present in a -CH₂-CH(OH)-CH₂- segment or a -CH₂-CH₂-CH(OH)- segment.

9. The article of any of claims 2 to 8, wherein the polymer is an aromatic polyether polymer.

10. The article of claim 9, wherein the aromatic polyether polymer is a reaction product of ingredients including one or both of (i) a dihydric phenol and (ii) a diepoxide of a dihydric phenol, wherein the dihydric phenol of (i) and (ii) are the same or different.

11. The article of claim 9, wherein the aromatic polyether polymer is a reaction product of ingredients including a diepoxide and a dihydric phenol.

12. The article of claim 11, wherein the diepoxide includes at least one backbone or pendant aryl group.

13. The article of any of claims 1 to 12, where the coating composition is substantially free of bisphenol compounds; and/or wherein the coating composition is substantially free of each of formaldehyde and melamine; and/or wherein the coating composition is substantially free of (e.g., does not include any) crosslinker compounds, with the proviso that the polymer having a beta-dicarbonyl group is not considered a crosslinker compound for purposes of this claim.

14. The article of any of claims 1 to 13, wherein the article comprises a metal food or beverage can containing a food or beverage product.

15. The coating composition of any of claims 1 to 14.

16. A method comprising applying a coating composition to a metal substrate prior to or after forming the metal substrate into a food or beverage container or a portion thereof, the coating composition including a polyether polymer having a beta-dicarbonyl group.

## Patentansprüche

1. Erzeugnis, umfassend einen Lebensmittel- oder Getränkebehälter oder einen Abschnitt davon, das Erzeugnis umfassend:
ein Metallsubstrat;
eine thermisch gehärtete Beschichtung, die auf mindestens einem Abschnitt des Substrats angeordnet ist, wobei die Beschichtung durch Einbrennen einer Beschichtungszusammensetzung bei einer Temperatur von mindestens 150 °C ausgebildet wurde, und wobei die Beschichtungszusammensetzung vor dem Einbrennen ein Polyetherpolymer, das eine beta-Dicarbonylgruppe aufweist, umfasst.

2. Erzeugnis nach Anspruch 1, wobei die beta-Dicarbonylgruppe die Struktur der nachstehenden Formel (I) aufweist:
-(R¹)ₙ-C(=0)-C(R²)₂-C(=0)-R³ (I)
wobei:
R¹, falls vorhanden, eine Verknüpfungsgruppe ist, die an ein Rückgratatom des Polymers angelagert ist;
jedes R² unabhängig Wasserstoff, eine organische Gruppe oder eine beliebige andere Gruppe ist, die die Reaktivität des Kohlenstoffatoms, das an die Kohlenstoffatome der zwei dargestellten Carbonylgruppen angelagert ist, nicht wesentlich reduziert;
R³ Wasserstoff, eine organische Gruppe oder eine beliebige andere Gruppe ist, die die Reaktivität des Kohlenstoffatoms, das an die Kohlenstoffatome der zwei dargestellten Carbonylgruppen angelagert ist, nicht wesentlich reduziert;
n 0 oder 1 ist; und
zwei oder mehr von R¹, R² und/oder R³ sich optional verbinden können, um eine oder mehrere cyclische Gruppen auszubilden.

3. Erzeugnis nach Anspruch 2, wobei n 1 ist.

4. Erzeugnis nach Anspruch 3, wobei R¹ ein Sauerstoff- oder Stickstoffatom einschließt.

5. Erzeugnis nach Anspruch 4, wobei das Sauerstoff- oder Stickstoffatom an den dargestellten Kohlenstoff der Carbonylgruppe angelagert ist.

6. Erzeugnis nach einem der Ansprüche 1 bis 5, wobei die beta-Dicarbonylgruppe in einer Seitengruppe vorhanden ist, die an ein Rückgratatom des Polymers angelagert ist, und wobei die Seitengruppe durch Reaktion einer ersten funktionellen Gruppe, die auf einer beta-Dicarbonylverbindung oder einer Verbindung vorhanden ist, die in der Lage ist, eine beta-Dicarbonylgruppe auszubilden, mit einer zweiten funktionellen Gruppe bereitgestellt ist, die auf dem Polymer oder einem Vorläufer davon vorhanden ist, und vorzugsweise wobei die erste funktionelle Gruppe eine Estergruppe, Amidgruppe oder Acylhalogenidgruppe ist und/oder vorzugsweise wobei die zweite funktionelle Gruppe eine Hydroxyl- oder Amingruppe ist.

7. Erzeugnis nach Anspruch 6, wobei die zweite funktionelle Gruppe eine sekundäre Hydroxylgruppe ist.

8. Erzeugnis nach Anspruch 7, wobei die sekundäre Hydroxylgruppe in einem Segment von -CH₂-CH(OH)-CH₂- oder einem Segment von -CH₂-CH₂-CH(OH)- vorhanden ist.

9. Erzeugnis nach einem der Ansprüche 2 bis 8, wobei das Polymer ein aromatisches Polyetherpolymer ist.

10. Erzeugnis nach Anspruch 9, wobei das aromatische Polyetherpolymer ein Reaktionsprodukt von Bestandteilen ist, die eines oder beide von (i) einem zweiwertigen Phenol und (ii) einem Diepoxid eines zweiwertigen Phenols einschließen, wobei das zweiwertige Phenol von (i) und (ii) gleich oder verschieden sind.

11. Erzeugnis nach Anspruch 9, wobei das aromatische Polyetherpolymer ein Reaktionsprodukt von Bestandteilen ist, die ein Diepoxid und ein zweiwertiges Phenol einschließen.

12. Erzeugnis nach Anspruch 11, wobei das Diepoxid mindestens ein Rückgrat oder eine Seitenarylgruppe einschließt.

13. Erzeugnis nach einem der Ansprüche 1 bis 12, wobei die Beschichtungszusammensetzung im Wesentlichen frei von Bisphenolverbindungen ist; und/oder wobei die Beschichtungszusammensetzung im Wesentlichen frei von jedem von Formaldehyd und Melamin ist; und/oder wobei die Beschichtungszusammensetzung im Wesentlichen frei von Vernetzerverbindungen ist (z. B. keine einschließt), mit der Maßgabe, dass das Polymer, das eine beta-Dicarbonylgruppe aufweist, nicht als eine Vernetzerverbindung für Zwecke dieses Anspruchs betrachtet wird.

14. Erzeugnis nach einem der Ansprüche 1 bis 13, wobei das Erzeugnis eine Lebensmittel- oder Getränkedose aus Metall umfasst, die ein Lebensmittel- oder Getränkeprodukt enthält.

15. Beschichtungszusammensetzung nach einem der Ansprüche 1 bis 14.

16. Verfahren, umfassend ein Aufbringen einer Beschichtungszusammensetzung auf ein Metallsubstrat vor oder nach dem Ausbilden des Metallsubstrats in einen Lebensmittel- oder Getränkebehälter oder einen Abschnitt davon, wobei die Beschichtungszusammensetzung ein Polyetherpolymer, das eine beta-Dicarbonylgruppe aufweist, einschließt.

## Revendications

1. Article comprenant un récipient pour aliment ou boisson, ou une partie de celui-ci, l'article comprenant :
un substrat métallique ;
un revêtement durci thermiquement disposé sur au moins une partie du substrat, dans lequel le revêtement a été formé par cuisson d'une composition de revêtement à une température d'au moins 150 °C, et dans lequel, avant cuisson, la composition de revêtement comprend un polymère de polyéther ayant un groupe bêta-dicarbonyle.

2. Article selon la revendication 1, dans lequel le groupe bêta-dicarbonyle a la structure de la Formule (I) ci-après :
-(R¹)ₙ-C(=O)-C(R²)₂-C(=O)-R³ (I)
dans laquelle :
R¹, s'il est présent, est un groupe de liaison attaché à un atome de squelette du polymère ;
chaque R² est indépendamment un hydrogène, un groupe organique, ou tout autre groupe qui ne réduit pas sensiblement la réactivité de l'atome de carbone attaché aux atomes de carbone des deux groupes carbonyle représentés ;
R³ est un hydrogène, un groupe organique, ou tout autre groupe qui ne réduit pas sensiblement la réactivité de l'atome de carbone attaché aux atomes de carbone des deux groupes carbonyle représentés ;
n vaut 0 ou 1 ; et
deux parmi R¹, R² et/ou R³ ou plus peuvent facultativement se joindre pour former un ou plusieurs groupes cycliques.

3. Article selon la revendication 2, dans lequel n vaut 1.

4. Article selon la revendication 3, dans lequel R¹ comporte un atome d'oxygène ou d'azote.

5. Article selon la revendication 4, dans lequel l'atome d'oxygène ou d'azote est attaché au carbone représenté du groupe carbonyle.

6. Article selon l'une quelconque des revendications 1 à 5, dans lequel le groupe bêta-dicarbonyle est présent dans un groupe pendant attaché à un atome de squelette du polymère, et dans lequel le groupe pendant est fourni par réaction d'un premier groupe fonctionnel présent sur un composé bêta-dicarbonyle ou un composé susceptible de former un groupe bêta-dicarbonyle avec un second groupe fonctionnel présent sur le polymère ou un précurseur de celui-ci et de préférence dans lequel le premier groupe fonctionnel est un groupe ester, un groupe amide, ou un groupe halogénure d'acyle et/ou de préférence dans lequel le second groupe fonctionnel est un groupe hydroxyle ou amine.

7. Article selon la revendication 6, dans lequel le second groupe fonctionnel est un groupe hydroxyle secondaire.

8. Article selon la revendication 7, dans lequel le groupe hydroxyle secondaire est présent dans un segment -CH₂-CH(OH)-CH₂- ou un segment - CH₂CH₂-CH(OH)-.

9. Article selon l'une quelconque des revendications 2 à 8, dans lequel le polymère est un polymère de polyéther aromatique.

10. Article selon la revendication 9, dans lequel le polymère de polyéther aromatique est un produit de réaction d'ingrédients comportant un ou les deux parmi (i) un phénol dihydrique et (ii) un diépoxyde d'un phénol dihydrique, dans lequel le phénol dihydrique de (i) et (ii) sont identiques ou différents.

11. Article selon la revendication 9, dans lequel le polymère de polyéther aromatique est un produit de réaction d'ingrédients comportant un diépoxyde et un phénol dihydrique.

12. Article selon la revendication 11, dans lequel le diépoxyde comporte au moins un groupe aryle de squelette ou pendant.

13. Article selon l'une quelconque des revendications 1 à 12, où la composition de revêtement est sensiblement exempte de composés de bisphénol ; et/ou dans lequel la composition de revêtement est sensiblement exempte de chacun parmi le formaldéhyde et la mélamine ; et/ou dans lequel la composition de revêtement est sensiblement exempte de (par exemple, ne comporte aucun) composé de réticulation, à condition que le polymère ayant un groupe bêta-dicarbonyle ne soit pas considéré comme un composé de réticulation aux fins de cette revendication.

14. Article selon l'une quelconque des revendications 1 à 13, dans lequel l'article comprend une boîte métallique pour aliment ou boisson contenant un produit de type aliment ou boisson.

15. Composition de revêtement selon l'une quelconque des revendications 1 à 14.

16. Procédé comprenant l'application d'une composition de revêtement sur un substrat métallique avant ou après la formation du substrat métallique dans un récipient pour aliment ou boisson ou une partie de celui-ci, la composition de revêtement comportant un polymère de polyéther ayant un groupe bêta-dicarbonyle.
